(19) Europäisches Patentamt
European Patent Office
Office européen des brevets

(11) Veröffentlichungsnummer: **0 309 866 B1**

(12) **EUROPÄISCHE PATENTSCHRIFT**

(45) Veröffentlichungstag der Patentschrift: **15.07.92**

(51) Int. Cl.$^5$: **C08G 18/32**

(21) Anmeldenummer: **88115375.3**

(22) Anmeldetag: **20.09.88**

# (54) Verfahren zur Herstellung von kalthärtenden Polyurethanharnstoff-Elastomeren.

(30) Priorität: **29.09.87 DE 3732727**

(43) Veröffentlichungstag der Anmeldung:
**05.04.89 Patentblatt 89/14**

(45) Bekanntmachung des Hinweises auf die Patenterteilung:
**15.07.92 Patentblatt 92/29**

(84) Benannte Vertragsstaaten:
**AT BE CH DE ES FR GB IT LI NL SE**

(56) Entgegenhaltungen:

**POLYMER SCIENCE U.S.S.R., Band 23, Nr. 11, 1981, Seiten 2715-2721, Oxford, GB; F.A. KRYUCCHKOV et al.: "The synthesis of polyurethane ureas with a specific MWD of their rigid segments"**

**CHEMICAL ABSTRACTS, Band 94, Nr. 4, Februar 1981, Seite 37, Zusammenfassung Nr. 48271g, Columbus, Ohio, US; SU-A-686 390 (ALL-UNION SCIENTIFIC-RESEARCH INSTITUTE OF SYNTHETIC RESINS) 15-10-1980**

(73) Patentinhaber: **BAYER AG**

**W-5090 Leverkusen 1 Bayerwerk(DE)**

(72) Erfinder: **Grögler, Gerhard, Dr.**
**von-Diergardt-Strasse 48**
**W-5090 Leverkusen 1(DE)**
Erfinder: **Ruckes, Andreas, Dr.**
**Herderstrasse 13**
**W-5090 Leverkusen 3(DE)**
Erfinder: **Hess, Heinrich, Dr.**
**Körnerstrasse 5**
**W-5090 Leverkusen 1(DE)**
Erfinder: **Kopp, Richard, Dr.**
**Bilharzstrasse 15**
**W-5000 Köln 80(DE)**

EP 0 309 866 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein technisch vereinfachtes Verfahren zur Herstellung von kalthärtenden Polyurethanharnstoff-Elastomeren, bei der hochschmelzende, in fester Phase vorliegende aromatische Diamine mit Isocyanat-Prepolymeren in heterogener Reaktion umgesetzt werden.

Die Herstellung von Polyurethanharnstoff-Elastomeren aus Polyisocyanaten, höhermolekularen Polyhydroxylverbindungen und aromatischen Diaminen ist bekannt. Um angemessene Verarbeitungszeiten für Reaktivsysteme aus den genannten Ausgangskomponenten zu gewährleisten, setzt man die technisch meistverwendeten reaktionsfähigen aromatischen Isocyanate zweckmäßigerweise mit träge reagierenden Diaminen um. Als Diamine haben sich in diesem Zusammenhang in der Praxis vor allem solche aromatischen Diamine bewährt, deren Basizität und damit auch Reaktivität gegenüber Isocyanaten durch Einführung von Halogen- oder Carboxy-Substituenten herabgesetzt ist. Als Beispiel sei das bisher am meisten verwendete 3,3′-Dichlor-4,4′-diaminodiphenylmethan (MOCA) genannt.

In der US-Patentschrift 3 891 606 wird die Vernetzung von NCO-Präpolymeren aus Polyhydroxylverbindungen und einem Überschuß an Polyisocyanaten mit aromatischen Diaminen beschreiben, deren Reaktivität gegenüber Isocyanatgruppen durch Komplexbildung mit gewissen Alkalimetallsalzen herabgesetzt ist. Der Nachteil dieses Verfahrens liegt darin, daß es auf zwei spezielle aromatische Diamine beschränkt ist. Darüberhinaus muß der Komplex zwischen dem aromatischen Diamin und dem Alkalimetallsalz in einem gesonderten Verfahrensschritt hergestellt werden.

Ein weitere Möglichkeit der Steuerung der Reaktionsgeschwindigkeit zwischen Polyisocyanaten und aromatischen Diaminen besteht darin, die Reaktion in einem organischen Lösungsmittel auszuführen. Verfahren dieser Art werden beispielsweise in US-Patent 3 926 922 und in der japanischen Offenlegungsschrift 9195/70 beschrieben. Der Nachteil einer Mitverwendung von organischen Lösungsmitteln liegt auf der Hand: Einerseits wird die Feuer-und Explosionsgefahr erhöht und andererseits ist aus ökonomischen und ökologischen Gründen eine technisch aufwendige Rückgewinnung des Lösungsmittels erforderlich.

Über die Herstellung von Polyurethanharnstoffen durch Umsetzung von Polyisocyanaten mit aromatischen Diaminen in heterogener Phase ist bisher nur wenig bekannt. Die technisch im allgemeinen besonders interessanten aromatischen Diamine mit höherem Schmelzpunkt werden gemäß Stand der Technik entweder in gelöster Form angewandt, was mit den eben beschriebenen Nachteilen verbunden ist, oder aber in der Schmelze mit Polyisocyanaten umgesetzt. Die Verarbeitung von aromatischen Diaminen in der Schmelze wird beispielsweise in der schon oben erwähnten US-Patentschrift 3 926 922 oder in der Deutschen Auslegeschrift 1 122 699 beschrieben. Gegenstand der DE-AS 1 122 699 ist ein Verfahren zur Herstellung von Polyurethanelastomeren durch Vernetzung von flüssigen Isocyanat-Präpolymeren durch Umsetzung mit Gemischen aus primären Diaminen und mehrere Hydroxylgruppen aufweisenden Verbindungen unter Formgebung, in welchem eine Dispersion eines pulverförmigen kristallinen Diamins in einem flüssigen, mehrere Hydroxylgruppen aufweisenden Polyester, Polyether oder in Rizinusöl in das Präpolymere bei einer unter dem Schmelzpunkt des Diamins liegenden Temperatur eingebracht und die Masse bei Temperaturen oberhalb des Schmelzpunktes des Diamins in der Mischung in an sich bekannter Weise ausgehärtet wird. Die eigentliche "Aminvernetzung" findet also auch bei diesem Verfahren in flüssiger, homogener Phase statt. Nachteilig sind bei dem Verfahren der DE-AS 1 122 699 insbesondere die bei der Verarbeitung hochschmelzender Diamine, wie z. B. 1,5-Naphthylendiamin (m.p. = 189 °C) oder 4,4′-Diaminodiphenylether (m.p. = 186 °C), erforderlichen hohen Temperaturen, da hierbei erfahrungsgemäß bereits in merklichem Umfang Zersetzungsreaktionen im Polyurethan auftreten, die die mechanischen Eigenschaften der Verfahrensprodukte in unkontrollierbarer Weise verändern.

In der US-PS 3 105 062 wird ein Verfahren zur Herstellung von Polyurethanharnstoffen beschrieben, bei dem Isocyanatgruppen enthaltende höhermolekulare Voraddukte mit vorzugsweise aromatischen Diaminen in heterogener Phase umgesetzt werden. Die Verfestigung dieser Reaktionsmischungen erfolgt bei einer Temperatur, bei der das "Zwei-Phasensystem" in ein "Ein-Phasensystem" übergeht. Diese Temperatur liegt in der Regel bei 100 bis 170 °C.

Die in US-PS 3 105 062 zitierten aromatischen Diamine zeigen jedoch in dem Reaktionsmedium (NCO-Voraddukt) noch eine - wenn auch geringe - Löslichkeit, so daß bei dem Mischvorgang der beiden Komponenten auch bei Raumtemperatur bereits unkontrollierbare Vorreaktionen ablaufen. Die Folge ist, daß die Reaktionsansätze in sehr kurzer Zeit aufdicken und man zum Teil pastenartige Formulierungen erhält. Diese sind im üblichen Gießverfahren nur noch schwer zu verarbeiten und müssen daher unter Druckanwendung in die gewünschte Form gebracht werden, bevor die eigentliche Verfestigung durch Hitzeeinwirkung erfolgt. Die Lagerstabilität der aufgedickten Reaktionsmischungen (Topfzeit) ist gemäß US-PS 3 105 062 ausreichend für die weitere Verarbeitung (Formgebung unter Druck, Beschichtung). Sie beträgt mehrer Stunden. Aus den angeführten Beispielen ist zu entnehmen, daß es sich vorzugsweise um Reaktionsmischungen handelt, die eine maximale Topfzeit von etwa einer Stunde besitzen. Sie können daher nicht als Langzeit-Systeme betrachtet werden.

In der US-PS 3 105 062 wird ausdrücklich darauf hingewiesen, daß die Verwendung der dort genannten - nur in fester Form vorliegenden Diamine - im Einstufen-Prozeß nur zu unbefriedigenden Polyurethan-Formkörpern führt. In diesem Falle erfolgt in verstärktem Maße die unerwünschte Vorreaktion des Diamins mit dem Diisocyanat, wobei der schwer lösliche Polyharnstoff im Reaktionsgemisch ausfällt und nicht mehr weiter reagiert.

In der DE-OS 26 35 400 wird ein weiteres Verfahren zur Herstellung von Polyurethanharnstoff-Elastomeren beschrieben, bei dem in ein- oder mehrstufigem Verfahren aromatische Diamine als Kettenverlängerer zur Reaktion gelangen. Dieses Verfahren ist dadurch gekennzeichnet, daß die aromatischen Diamine in fester Form in den Reaktionsmischungen vorliegen und einen Schmelzpunkt oberhalb von 130 ° C aufweisen. Die Hitzeverfestigung dieser Ansätze erfolgt in einem Temperaturbereich von 80 bis 120 ° C und damit unterhalb des Schmelzpunktes des aromatischen Diamins. Bedingt durch die Auswahl der entsprechenden Diamine als Kettenverlängerer erfolgt mit dem NCO-haltigen Voraddukt (NCO-Präpolymer) keine vorläufige Vorreaktion, die zu einer Aufdickung der Ansätze führt. Solche Systeme können demgemäß auch im Gießverfahren gut verarbeitet werden. Da die Topfzeit dieser Reaktivsysteme erheblich erhöht ist, können nach diesem Verfahren viele aromatische Diamine eingesetzt werden, die nach der bisher bekannten Arbeitstechnik nur sehr schlecht zu verarbeiten waren.

Aus den in DE-OS 26 35 400 angegebenen Beispielen ist zu entnehmen, daß die Topfzeit der flüssigen Reaktionsmischungen je nach Reaktivität bzw. Löslichkeit des aromatischen Diamins in einem bestimmten Temperaturbereich wenige Minuten bis mehrere Stunden liegt. Für übliche Verarbeitungsbedingungen, z. B. im Handgießverfahren sind diese Reaktionsansätze insbesondere die mit längerer Topfzeit meist ohne große Schwierigkeit zu verarbeiten. Problematisch wird es dagegen, wenn infolge Maschinenausfällen oder anderen Zwangspausen eine längere Unterbrechung zwischen Herstellung und Reaktionsansätze und Verfestigungsphase vorliegt. Die Forderung nach langer Verarbeitungszeit bei niederer Temperatur und kurzer Verfestigungszeit bei erhöhter Temperatur, wird daher in der Praxis immer dringender.

Die fertigen PUR-Kunststoffe sollen im allgemeinen gute mechanische Eigenschaften und vielfach auch eine dem Verwendungszweck angepaßte Wärmestabilität besitzen. Nach dem Stand der Technik ist diese Wärmestabilität von PUR-Elastomeren stark von der Art der Kettenverlängerer abhängig. Werden zur Herstellung von Elastomeren z. B. glykolische Kettenverlängerer verwendet, so resultieren PUR-Körper mit geringerer Wärmestabilität als bei Verwendung von Aminogruppen enthaltenden Verbindungen. Selbstverständlich sind innerhalb der jeweiligen Art von Kettenverlängerern (HO- oder $NH_2$-gruppenhaltige Verbindungen) auch noch deutliche Unterschiede bezüglich des Wärmestandes zu erkennen.

In der DE-OS 26 35 400 wurden zur Herstellung von Polyurethanharnstoff-Elastomeren zahlreiche Diamine mit verschiedener Konstitution als geeignete Kettenverlängerer angegeben. Als einziger Vertreter eines Diaminodiphenylharnstoffes wird 2,2′-Diaminodiphenylharnstoff erwähnt.

Ein Versuchsbeispiel fehlt.

Die Überprüfung der Anmeldung ergab, daß die Umsetzung eines NCO-Voradduktes mit dem obengenannten Diaminodiphenylharnstoff einen elastischen PUR-Formkörper mit durchaus akzeptablem mechanischen Werteniveau liefert. Der Wärmestand dieser Elastomeren ist jedoch unerwartet schlecht. Bereits bei der Nachtemperung des Formkörpers bei 120-130 ° C tritt nach kurzer Zeit ein beachtlicher Abfall der mechanischen Werte ein. Bei 140-150 ° C liegt nur noch eine zähe Schmelze vor, unabhängig davon, ob die Probe in heißem oder in kaltem Zustand vorliegt (Beispiel).

Bei Raumtemperatur oder leicht erhöhter Temperatur abreagierende Zweikomponenten Polyurethan-Polyharnstoff-Gießsysteme (PUR-Gießsysteme) mit nach beliebig lang einstellbarer Topfzeit (Gießzeit) und danach rascher Endverfestigung (griff- und trittfest, oberflächlich trocken) nach eintretendem Verfestigungsbeginn sind nicht bekannt. Die bisher beschriebenen Langtopfzeit-Systeme mit "Kalthärtung" besitzen alle den Nachteil, daß entweder die Gießzeit nicht über 20 - 30 Min. liegt oder die Endverfestigung sich über Tage hinweg erstreckt.

Aufgabe der vorliegenden Erfindung war es daher, ein 2-Komponenten-PUR-Gießsystem zu finden, welches dem Idealbild des kalthärtenden Zweikomponenten-PUR-Gießsystems möglichst nahe kommt: Lange bzw. beliebig einstellbare Topfzeit bei RT und Abbindezeit in möglichst kurzer Zeitspanne.

Das Ziel der vorliegenden Erfindung war daher, ein Verfahren zur Herstellung von Polyurethanharnstoffen zu finden, bei dem die Verarbeitungszeit der Reaktionsansätze bei der jeweiligen Verarbeitungstemperatur in einem Bereich von mindestens mehreren Stunden, vorzugsweise von mindestens 8 Stunden (Langzeit-System), liegt. Wünschenswert ist weiterhin, daß sich die flüssigen Reaktionsansätze bei möglichst niederen Reaktionstemperaturen in wirtschaftlich interessanter Reaktionszeit verfestigen lassen.

Der vorliegenden Erfindung liegt auch der Gedanke zugrunde, geeignete Aminogruppen enthaltende

Kettenverlängerer sowie geeignete Ausgangskomponenten (NCO-Voraddukte) zu finden. Diese NCO-Voraddukte sollten die Eigenschaft besitzen, den festen Kettenverlängerer bei Raumtemperatur nur in einem geringen Maße anzulösen, wobei die in geringer Menge entstehenden Polyadditionsprodukte in keinem Falle zu einer Verklumpung oder zu starker Viskositätserhöhung des Ansatzes führen dürfen. Gewünscht wird ein bei Raumtemperatur sehr langsam ablaufender, kontinuierlicher Übergang des festen Kettenverlängerers in die gelöste reaktive Form. Infolge der in starker Verdünnung ablaufenden Umsetzung beider Reaktionspartner erfolgt nur langsam Aufbau des Polyurethan-Harnstoffen. Die Endverfestigung des Systems muß andererseits aber auch in einer wirtschaftlich interessanten Zeitspanne liegen.

Das Ziel der vorliegenden Erfindung war daher, ein Verfahren zur Herstellung von Polyurethanharnstoff-Elastomeren zu finden, bei dem hochwertige Elastomere mit möglichst hohem Wärmestand erhalten werden.

Es wurde nun überraschenderweise gefunden, daß in fein verteilter Form vorliegende Diaminodiphenylharnstoffe der allgemeinen Formel

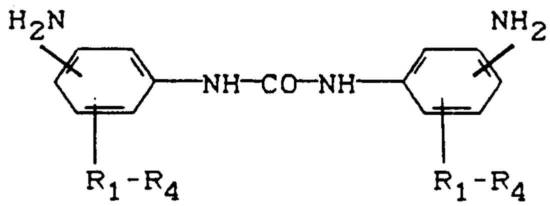

bei denen sich die $NH_2$-Gruppen in m- und/oder p-Stellung zur Harnstoffgruppe befinden und $R^1$, $R^2$, $R^3$ und $R^4$ (gleich oder verschieden) = H oder $C_1$-$C_6$-Resten entsprechen,
in Kombination mit NCO-Voraddukten Langzeit-lagerstabile Reaktionsmischungen ergeben.

Gegenstand der vorliegenden Erfindung ist ein Verfahren zur Herstellung von Polyurethankunststoff-Elastomeren aus endständig NCO-Gruppen aufweisenden Reaktionsprodukten aus Polyethern mit einem Molgewicht von 400 bis 10.000 und einem zusätzlichen Ethylenoxid-Gehalt von 10 bis 60 Mol.-% und Polyisocyanaten und festen Diaminodiphenylharnstoffen der allgemeinen Formel

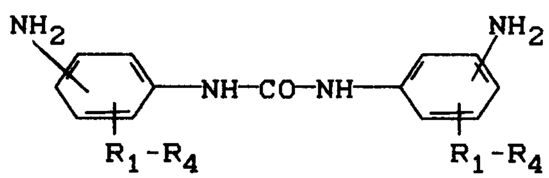

bei denen sich die Aminogruppe in m- und/oder p-Stellung zur Harnstoffgruppe befindet und $R_1$ - $R_4$ (gleich oder verschieden) Wasserstoff oder $C_1$-$C_6$-Alkylresten entsprechen, welches dadurch gekennzeichnet ist, daß man die NCO-Gruppen aufweisenden Prepolymere mit den in feinteiliger Form vorliegenden Diaminodiphenylharnstoffen in heterogener Phase bei Temperaturen von etwa 5 bis 40 °C umsetzt.

Die Lagerstabilität solcher Reaktivsysteme liegt in einem Zeitraum von mindestens 2 Stunden.

Werden die erfindungsgemäßen Kettenverlängerer dagegen in gelöster Form den NCO-Voraddukten zugesetzt, so verhalten sie sich wie übliche aromatische Diamine. Nach wenigen Sekunden erfolgt Vernetzung des Reaktionsansatzes und das verquallte Folgeprodukt ist nicht mehr weiter zu verarbeiten.

Für die lange Standzeit der erfindungsgemäßen Reaktionsmischungen ist daher die Reaktivität der in heterogener Phase vorliegenden Diaminodiphenylharnstoffe gegenüber den NCO-Gruppen der höhermolekularen Voraddukte nur von geringer Bedeutung. Im wesentlichen hängt die Vernetzungsgeschwindigkeit vielmehr von der Tendenz der Diamine ab, sich in der Reaktionsmischung aufzulösen. Demzufolge ist die Lagerstabilität der Reaktionsansätze auch stark abhängig von der Art des dem NCO-Voraddukt zugrunde liegenden Polyols. Durch Verwendung geeigneter Polyole kann auch die Vernetzungszeit bzw. die Vernetzungstemperatur der Ansätze im gewünschen Sinne beeinflußt werden.

Werden z. B. zur Herstellung der NCO-Voraddukte die handelsüblichen Polypropylenglykolether (aus Propylenoxid + $H_2O$) verwendet, so erhält man in Abmischung mit geeigneten Diaminodiphenylharnstoffen bei Raumtemperatur lagerstabile Einkomponentensysteme. Die Verfestigung solcher Ansätze erfolgt bei den vorgegebenen Temperaturen aber erst nach sehr langer Hitzeeinwirkung. Während dieser Zeit können

unkontrollierbare Nebenreaktionen des NCO-Voradduktes ablaufen (z. B. Trimerisierung, Allophanatisierung), so daß unbefriedigende Elastomere erhalten werden.

Diese lange Verfestigungszeit kann jedoch beträchtlich erniedrigt werden, wenn als Ausgangskomponenten z. B. Polypropylenglykolether verwendet werden, die zusätzlich Ethylenoxid-Einheiten enthalten. Der Charakter des Einkomponentensystems wird dadurch nicht verändert. Durch den Gehalt an Ethylenoxid-Einheiten wird zudem die "Kalthärtung" ermöglicht.

Keinesfalls darf jedoch beim Abmischen beider Reaktionskomponenten (NCO-Voraddukt und aromatisches Diamin) bei Raumtemperatur oder leicht erhöhter Temperatur eine Vorverdickung infolge vorzeitiger Polyaddition der Reaktionsansätze erfolgen.

Die erfindungsgemäß geeigneten Diaminodiphenylharnstoffe werden nach an sich bekannten Methoden hergestellt. So können z. B. Nitroaniline mit Phosgen oder Diphenylcarbonat in die entsprechenden Dinitrodiphenylharnstoffe überführt und anschließend durch Reduktion in die gewünschten Diaminodiphenylharnstoffe überführt werden. Eine andere allgemein anwendbare Methode ist die Reaktion von Aminoacetaniliden mit Phosgen oder Diphenylcarbonat mit anschließender alkalischer Verseifung der Acetamid-Gruppe zum gewünschten Produkt.

Eine besonders einfache und deshalb zur Herstellung der erfindungsgemäßen Harnstoffe bevorzugte Methode ist die Umsetzung von aromatischen p- bzw. m-Diaminen mit Harnstoff, wie sie in der US-PS 16 17 847 (in einem inerten Lösungsmittel oder in der Schmelze) oder der US-PS 25 03 797 (in schwefelsaurer oder neutraler wäßriger Lösung) beschrieben ist.

Bedingt durch die Herstellungsmethode werden jedoch in der Regel neben den monomeren Diaminodiphenylharnstoffen I auch höhermolekulare, mehrkernige Produkte der allgemeinen Formel II

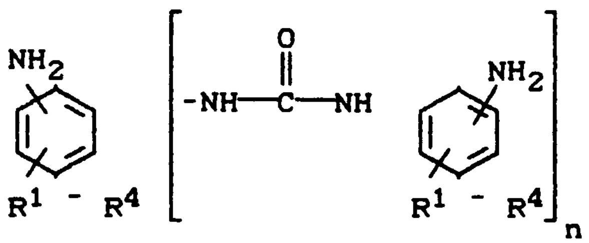

n > 2

gebildet, die jedoch innerhalb gewisser Grenzen keinen negativen Einfluß auf die Eigenschaften der Elastomeren haben. Der Anteil der Harnstoffe mit n = 1-3 muß jedoch mindestens 60 Gew.-%, bezogen auf die Gesamtmenge betragen. Bevorzugt werden jedoch Harnstoffe mit möglichst hohem Anteil an "Monomeren" (n = 1).

Die fest anfallenden Diaminodiphenylharnstoffe werden im allgemeinen zunächst fein gemahlen, was z. B. in einer Kugelmühle geschehen kann, bis sie eine durchschnittliche Korngröße von 1 bis 50 µm, vorzugsweise 3 bis 10 µm aufweisen.

Beispiele für bevorzugte Diamine zur Herstellung der erfindungsgemäßen Harnstoffe sind z. B. p-Phenylendiamin, m-Phenylendiamin, 2,5-Diaminotoluol, 2,4-Diaminotoluol, 2,6-Diaminotoluol, 1-Methyl-3,5-diethyl-2,6-diaminobenzol und 1,3,5-Triethyl-2,4-diaminobenzol. Die erhaltenen Diamino-Pulver können direkt mit dem NCO-Voraddukt vermischt werden oder sie können bevorzugt als Suspension mit wenig dem NCO-Voraddukt zugrunde liegenden hochmolekularen Polyol appliziert werden.

Selbstverständlich können auch Mischungen an den oben genannten Diaminodiphenylharnstoffen und anderen in der PUR-Chemie bekannten Kettenverlängerern mit mindestens zwei gegenüber Isocyanaten reaktionsfähigen Wasserstoffatomen mit einem Mol-Gewicht von 60 bis 400 eingesetzt werden.

Für das erfindungsgemäße Verfahren zur Herstellung von wärmestabilen Polyurethanharnstoffen können die oben genannten festen Diaminodiphenylharnstoffe gemäß DE-OS 3 429 149 auch in retardierter Form eingesetzt werden. So können die Diaminodiphenylharnstoffe vor der Verwendung als Kettenverlängerer z. B. in einem inerten Lösungsmittel oder bevorzugt in Suspension in einem hochmolekularen Polyol mit geringen Mengen eines geeigneten Polyisocyanates behandelt werden. Hierbei bildet sich auf der Teilchenoberfläche des Diamins eine dünne Polyharnstoff-Hülle, die als Diffusions-Sperrschicht dient. Bei einer bestimmten Temperatur oder auch durch Anlöseeffekt wird diese Diffusions- Sperrschicht zerstört und die Verfestigung des Ansatzes wird eingeleitet.

Mit diesen so modifizierten (retardierten) Diaminodiphenylharnstoffen (entweder als Pulver oder als Suspension in Polyol) erhält man in Kombination mit NCO-Voradduktén Reaktivsysteme, die eine deutlich längere Lagerstabilität aufweisen als solche Systeme, bei denen der Kettenverlängerer nicht mit einer Diffusions-Sperrschicht versehen wurde.

Die für das erfindungsgemäße Verfahren zur Herstellung der NCO-Gruppen aufweisenden Voraddukte geeigneten Polyhydroxylverbindungen sind vorzugsweise bei Raumtemperatur oder leicht erhöhter Temperatur in flüssiger Form vorliegende Polyalkylenoxidether in einem Molbereich von etwa 400 bis 10 000, vorzugsweise 600 bis 6 000. Besonders bevorzugt sind Polypropylenglykolether mit einem Molekülargewicht von 1000 bis 6000, die noch zusätzliche Ethylenoxid-Einheiten im Molekül besitzen. (Ethylenoxid-Gehalt von 10 bis 60, vorzugsweise 10 bis 30 Mol.-%)

Alle diese Polyhydroxylverbindungen sind für die Herstellung von homogenen und von zellförmigen Polyurethanen an sich bekannt.

Als erfindungsgemäß einzusetzende Ausgangskomponenten kommen weiter aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′- und/oder -4,4′-diphenylmethan-diisocyanat, 1,3- und 1,4-Phenylendiisocyanat,2,4- und 2,6-Toluylendiisocyanat sowie beliebige Gemische dieser Isomeren, Diphenylmethan-2,4′-und/oder -4,4′-diisocyanat, Naphthylen-1,5-diisocyanat, Triphenylmethan-4,4′4″-triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanatgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutsche Patentschrift 1 101 394, in der britischen Patentschrift 889 050 und in der französischen Patentschrift 7 017 514 beschrieben werden, durch Telemerisationsreaktionen hergestellte Polyisocyanate, wie sie z. B. in der belgischen Patentschrift 723 640 beschrieben werden, Estergruppen aufweisende Polyisocyanate, wie sie z. B. in den britischen Patentschriften 965 474 und 1 072 956, in der amerikanischen Patentschrift 3 567 763 und in der deutschen Patentschrift 1 231 688 genannt werden, sowie Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen dieser Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Die Polyisocyanate bzw. die aus den genannten Polyisocyanaten und den oben erwähnten höher- und/oder niedermolekularen Polyolen hergestellten Isocyanat-Prepolymeren sollen bei der Reaktion mit dem gepulverten bzw. suspendierten aromatischen Diamin in flüssiger Form vorliegen.

Sollen nach dem erfindungsgemäßen Verfahren Polyurethanschäume hergestellt werden, dann werden Wasser und/oder leicht flüchtige organische Substanzen als Treibmittel mitverwendet. Als organische Treibmittel kommen z. B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Die Treibwirkung kann auch durch Zusatz von bei höheren Temperaturen unter Abspaltung von Gasen, beispielsweise von Stickstoff, sich zersetzenden Verbindungen, z. B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 und 455 und 507 bis 510 beschrieben.

Erfindungsgemäß können auch Katalysatoren mitverwendet werden. Als mitzuverwendende Katalysatoren kommen solche der an sich bekannten Art in Frage, z. B. tertiäre Amine, wie Triethylamin, Tributylamin, N-Methyl-morpholin, N-Ethyl-morpholin, N,N,N′,N′-Tetramethyl-ethylendiamin, 1,4-Diaza-bicyclo-(2,2,2)-octan, N-Methyl-N′-dimethylaminoethyl-piperazin, N,N-Dimethylbenzylamin, Bis-(N,N- diethylaminoethyl)-adipat, N,N-Diethylbenzylamin, Pentamethyldiethylentriamin, N,N-Dimethylcyclohexylamin, N,N,N′,N′-Tetramethyl-1,3-butandiamin, N,N-Dimethyl-β- phenylethylamin, 1,2-Dimethylimidazol und 2-Methylimidazol.

Gegenüber Isocyanatgruppen aktive Wasserstoffatome aufweisende tertiäre Amine sind z. B. Triethanolamin, Triisopropanolamin, N-Methyl-diethanolamin, N-Ethyl-diethanolamin, N,N-Dimethyl-ethanolamin sowie deren Umsetzungsprodukte mit Alkylenoxiden wie Propylenoxid und/oder Ethylenoxid.

Als Katalysatoren kommen ferner Silaamine mit Kohlenstoff-Silizium-Bindungen, wie sie z. B. in der deutschen Patentschrift 1 229 290 beschrieben sind, in Frage, z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Dialkylzinnsalze von Carbonsäuren, wie z. B. Dibutyl-zinndiacetat, Dibutylzinn-dilaurat, Dibutylzinn-maleat oder Dioctylzinn-diacetat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Menge an Polyhydroxyl-Verbindungen mit einem Molekulargewicht von 400 bis 10.000, eingesetzt.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in der amerikanischen Patentschrift 2 764 565 beschrieben.

Erfindungsgemäß können ferner auch Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat oder Ammoniumphosphat und -Polyphosphat, ferner Stabilisatoren gegen Alterungs- und Witterungseinflüsse, Weichmacher und fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z. B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß infrage kommen, werden im Kunststoff-Handbuch, Band VI, herausgegeben von Vieweg und Höchtlen, Carl-Hanser-Verlag, München 1966, z. B. auf den Seiten 121 bis 205 beschrieben.

Die Mengen an Reaktionskomponenten werden im erfindungsgemäßen Verfahren in der Regel so gewählt, daß das Molverhältnis von Polyisocyanaten zu Kettenverlängerer plus Verbindung mit reaktionsfähigen OH-Gruppen - abhängig vom jeweils angewendeten Verarbeitungsverfahren - in der Regel zwischen

0,7 und 1,5 liegt, vorzugsweise zwischen 0,90 und 1,15. Der Prozentgehalt an NCO im Prepolymer, falls über die Prepolymerstufe gearbeitet wird, kann 1,8 bis 6 Gew.-% betragen. Das Molverhältnis von reaktionsfähigem Wasserstoff des Kettenverlängerers zu reaktionsfähigen OH-Gruppen kann in weiten Grenzen variieren, vorzugsweise soll es zwischen 0,4 und 1,5 liegen, wobei weiche bis harte Polyurethan-Typen resultieren. Neben den erfindungsgemäß zu verwendenden Diaminen können als Kettenverlängerer anteilsweise auch weitere Diamine oder auch Diole eingesetzt werden, z. B. solche, wie sie oben bei der Herstellung der Polyhydroxylverbindungen genannt wurden. Der Molenbruch des erfindungsgemäßen Amins im Kettenverlängerer soll aber zwischen 1 und 0,5 liegen, vorzugsweise zwischen 1 und 0,8.

Die Durchführung des erfindungsgemäßen Verfahrens erfolgt in einfacher Arbeitstechnik.

Die mindestens zwei Hydroxylgruppen aufweisende Polyolkomponente vom Mol-Gew. 400 bis 10.000 wird in an sich bekannter Weise mit einem Übermaß an Diisocyanat zu dem NCO-Gruppen aufweisenden Voraddukt umgesetzt. Durch NCO-Titration kann der Verlauf der Umsetzung kontrolliert werden. Nach Beendigung der Polyaddition wird der Diaminodiphenylharnstoff in Form eines festen Pulvers (Teilchengröße = 5 bis 50 µm) unter Verwendung eines geeigneten Rührgeräts eingetragen und die entstehende Suspension innig vermischt.

Man kann aber auch so verfahren, daß das feste Diamin-Pulver zunächst in wenig dem NCO-Voraddukt zugrunde liegenden hochmolekularen flüssigen Polyol vermischt wird. Die so erhaltene Paste oder noch gießbare Suspension kann dann dem NCO-Voraddukt zugesetzt werden. Dieses Verfahren bietet den Vorteil der einfachen Durchführbarkeit. Das Verhältnis von Diaminodiphenylharnstoff zu Polyol beträgt 1,0:0,5 bis 1,0:5, vorzugsweise 1,0:1,0-2,0.

Die Temperatur bei der Zugabe des Kettenverlängerers hängt von der Beschaffenheit des NCO-Voradduktes ab.

Bei flüssigen NCO-Voraddukten wird der Kettenverlängerer (in Substanz oder bevorzugt in Polyol/Suspension) bei Raumtemperatur zugesetzt. Bei hochviskosen oder festen NCO-Prepolymeren erfolgt die Zugabe bei derjenigen Temperatur, bei der ein einwandfreier Gießverlauf der Ansätze gewährleistet ist. Diese Temperatur soll 50 - 60 °C nicht überschreiten. Eine Vorreaktion der NCO-Prepolymeren und des aromatischen Diamins darf jedoch in keinem Falle erfolgen, da jegliche unkontrollierbare Viskositätserhöhung des Ansatzes die weitere Verarbeitung im normalen Gießverfahren erschwert.

Nach Zugabe des Diamins wird der Reaktionsansatz nach kurzer Zeit im Vakuum entgast.

Die Verarbeitungszeit (Topfzeit) dieser Systeme ist abhängig von der Art des Diaminodiphenylharnstoffs und dem NCO-Voraddukt. Selbstverständlich darf die Verarbeitungstemperatur nicht in zu hohem Bereich liegen, da dann Vorreaktionen nicht auszuschließen sind.

Die Verarbeitung der erfindungsgemäßen Reaktivsysteme richtet sich nach deren Beschaffenheit. Flüssige, bei Raumtemperatur gießbare Systeme lassen sich im Gießprozeß verarbeiten, gegebenenfalls werden sie vor der Verarbeitung kurz erwärmt (z. B. technische Artikel).

Nicht mehr gießbare, aber noch verlaufende Systeme können z. B. mit einer Rakel auf gewünschte Unterlagen aufgebracht werden (z.B. Beschichtungen, Beläge).

Plastische Systeme (Pasten) können unter Druck- und Formgebung verpreßt werden (z. B. bei Abdichtmassen).

Die Verfestigung der Systeme erfolgt bei der Umgebungstemperatur. Die Verfestigungszeit liegt in einem Bereich von ca. 10 bis 24 Stunden (trockene Oberfläche). Sie hängt von der Beschaffenheit des NCO-Voradduktes sowie dem Kettenverlängerer ab.

Die Endeigenschaften der verfestigten Teile werden dann nach ca. 1 Woche erreicht.

Erfindungsgemäß hergestellte Elastomere finden vielseitige Anwendung, z. B. für mechanisch stark beanspruchte Formkörper wie Reifen, Rollen, Keilriemen oder Dichtungen, die thermisch oder chemisch stark beansprucht werden, für Heißwasserrohre oder Motoren oder zur Herstellung von Folien, Textilbeschichtungen und Polyurethanpulvern.

Die Kettenverlängerung kann auch in Gegenwart der oben beschriebenen Treibmittel und Zusatzstoffe, bevorzugt in geschlossenen Formen, ausgeführt werden, wobei Schäume mit zelligem Kern und kompakter Oberfläche gebildet werden.

Die nach dem erfindungsgemäßen Verfahren zugänglichen elastischen und halbelastischen Schaumstoffe werden beispielsweise als Polstermaterialien, Matratzen, Verpackungsmaterial und wegen ihrer Flammfestigkeit auch in jenen Bereichen verwendet, wo diese Eigenschaften besonders wichtig sind, wie z. B. im Automobil- und Flugzeugbau und im allgemeinen Verkehrswesen. Die Schaumstoffe können dabei entweder nach dem Formschäumungsverfahren hergestellt werden oder durch Konfektionierung aus blockgeschäumtem Material enthalten werden.

Die folgenden Beispiele erläutern das erfindungsgemäße Verfahren. Wo nicht anders vermerkt, sind Zahlenwerte als Gewichtsteile bzw. Gewichtsprozente zu verstehen.

Beispiel 1 (Vergleichsbeispiel)

200 g eines NCO-Voradduktes (NCO-Gehalt = 3,5 %) aus einem linearen Polypropylenglykolether (MG = 2000, OH-Z: 56 und 2,4-Diisocyanatotoluol wurden bei Raumtemperatur mit 30,2 g fein gemahlenem 3,3′-Diamino-4,4′-dimethyl-diphenylharnstoff (Teilchengröße 10 - 30 µm) innig vermischt. Der 3,3′-Diamino-4,4′dimethyl-diphenylharnstoff besitzt noch oligomere Anteile (~ 60% 2-Kern, ~25% 3-Kern und ~15% 4-Kern).

Die erhaltene Suspension wird mittels eines Wasserstrahlvakuums entgast. Der Viskositätsaufbau dieser Reaktionsmischung wird bestimmt.

| | | |
|---|---|---|
| 1. Tag (Herstellung) | = 25 500 Cp/RT | } praktisch |
| 2. Tag | = 28 000 | } lager- |
| 3. Tag | = 28 500 | } stabil |
| 4. Tag | = 29 300 | |
| 6. Tag | = 32 800 | |
| 8. Tag | = 58 000 | |

Nach diesem Ergebnis verhält sich die Reaktionsmischung über ca. 4 Tage praktisch lagerstabil. Eine Verfestigung des Ansatzes kann nur durch Hitzeeinwirkung erreicht werden. Nach ca. 1 bis 2 Stunden erhält man bei 120 - 130 °C einen hochelastischen Polyurethan-Harnstoff.

Beispiel 2

Zur Herstellung des NCO-Voradduktes wird der in Beispiel 1 genannte, ausschließlich aus Propylenoxid-Anteilen aufgebaute Polypropylenglykolether durch Polyether ausgetauscht, die neben den Propylenoxid-Einheiten noch Ethylenoxid-Einheiten aufweisen. Die in üblichen Verfahrensweisen hergestellten NCO-Voraddukte auf Basis von 2,4-Diisocyanatoluol (NCO-Gehalt = 3,4 bis 3,6 %) zeigen nunmehr in Kombination mit 3,3′-Diamino-4,4′-dimethyldiphenylharnstoff ein völlig anderes Verfestigungsbild.

| NCO-Voraddukt | %EOx | Verfestigungsverhalten/Zeit | | | | | |
|---|---|---|---|---|---|---|---|
| | | 1/2 std. | 1 Std. | 2 Std. | 3 Std. | 4,5 Std. | über Nacht |
| 1. PPG-Ether | - | - | - | - | - | - | + |
| 2. " | 7,5 | - | - | - | - | - | + + |
| 3. " | 13 | - | - | - | + | + | + + + |
| 4. " | 25 | - | - | + | + + | + + + | + + + + |
| 5. " | 43 | + | + + | + + | + + + | + + + | + + + + |

+ = leichter Viskositätsaufbau
+ + = starker Viskositätsaufbau
+ + + = vernetzt, hochviskos
+ + + + = elastisch vernetzt

Die Verarbeitungszeit sowie die Verfestigungzeit der Reaktionsansätze kann bei Raumtemperatur über den Ethylenoxid(EOx)-Anteil im Polypropylenglykolether gesteuert werden.

Eine gewünschte lange Topfzeit (ca. 3 Std. bei Raumtemperatur) sowie eine durchaus praktikable Verfestigungszeit (über Nacht) wird dann erreicht, wenn der Polypropylenglykolether ca. 25 % EOx-Einheiten enthält. Geringere Anteile führen zu langer Topfzeit, verbunden mit sehr langer Verfestigungszeit. Höhere Anteile von EOx-Einheiten bewirken zwar rasche Verfestigung, aber auf Kosten der Verarbeitungszeit. Beide Alternativen sind in der Praxis unerwünscht.

Beispiel 3

200 g eines NCO-Voradduktes, das aus Toluylendiisocyanat (TDI) und aus einem linearen Polypropylenglykolether mit zusätzlich 20 % Ethylenoxid-Einheiten hergestellt wurde (NCO-Gehalt: 3,6 %), wurden bei Raumtemperatur mit 32 g fein gemahlenem 3,3′-Diamino-4,4′-dimethyldiphenylharnstoff homogen vermischt. Der Ansatz wird kurzzeitig im Vakuum entgast und dann in eine mit Trennmittel versehene Form gegossen. Die Topfzeit des flüssigen Reaktionsgemisches beträgt 2 bis 3 Stunden bei Raumtemperatur. Nach ca. 10 Stunden Lagerzeit bei Raumtemperatur kann der Probekörper entformt werden. Der völlig blasenfreie Formkörper (0,5 - 1 cm Schichtdicke) zeigt eine Härte von 84 Shore A. Über Nacht erhöht sich die Härte auf ca. 87 - 88 Shore A. Der Probekörper besitzt nun eine trockene Oberfläche und zeigt hochelastische Eigenschaften.

Auch nach einer weiteren Lagerung des Probekörpers bei Raumtemperatur ändert sich die Härte nur unwesentlich. (Erhöhung von 87 auf 89 Shore A nach einer Woche).

Spätestens nach dieser Zeit hat das hochelastische Polyurethan-Hanrnstoffelastomerseine Endeigenschaft erreicht.

Wie die mechanischen Werte zeigen, ist das Eigenschaftsniveau von diesen "kaltgehärteten" Elastomeren vergleichbar mit einem System, das nach 2 - 3 Stunden bei 120°C und nachfolgender Temperung erhalten wurde.

| physik. Werte | "Kalthärtung" (nach 1 Woche) | "Heißhärtung" 2 Std./120° |
|---|---|---|
| Modul (100%) MPa | 6,9 | 7,7 |
| Zugfestigkeit MPa | 7,1 | 8,7 |
| Bruchdehnung % | 400 | 450 |
| Weiterreißfestigkeit KN/m | 35,7 | 33,7 |
| Elastizität % | 50 | 56 |
| Härte (Shore A) | 89 | 90 |

**Patentansprüche**

**1.** Verfahren zur Herstellung von Polyurethankunststoff-Elastomeren aus endständig NCO-Gruppen aufweisenden Reaktionsprodukten aus Polyethern mit einem Molgewicht von 400 bis 10.000 und einem zusätzlichen Ethylenoxid-Gehalt von 10 bis 60 Mol.-% und Polyisocyanaten und Diaminodiphenylharnstoffen der allgemeinen Formel

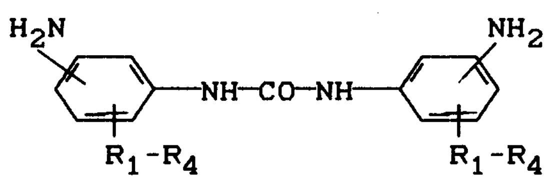

bei denen sich die Aminogruppen in m- und/oder p-Stellung zur Harnstoffgruppe befinden und $R^1$ bis $R^4$ (gleich oder verschieden) Wasserstoff oder $C_1$-$C_6$-Alkylrest entsprechen, dadurch gekennzeichnet, daß man die NCO-Gruppen aufweisenden Polymere mit den in feinverteilter Form und gegebenenfalls in retardierter Form vorliegenden Diaminodiphenylharnstoffen in heterogener Phase bei Temperaturen von 5 bis 40°C umsetzt.

**2.** Verfahren gemäß Anspruch 1, dadurch gekennzeichnet, daß zur Herstellung des NCO-Voradduktes Polypropylenglykolether mit einem Molgewicht von 1.000 bis 6.000 mit einem zusätzlichen Ethylenoxid-Gehalt von 10 bis 60 %, vorzugsweise 10 bis 30 % verwendet wurden.

**3.** Verfahren zur Herstellung von Polyurethanharnstoffen gemäß Anspruch 1 oder 2, dadurch gekennzeichnet, daß der Aminogruppen enthaltende feste Kettenverlängerer in Form einer Suspension in einem hochmolekularen Polyol vorliegt und das Gewichtsverhältnis Diaminodiphenylharnstoff zu Polyol in einem Bereich von

1,0 : 0,5 bis 5,0, vorzugsweise

1,0 : 1,0 bis 2,0 liegt.

4. Verfahren gemäß einem der Ansprüche 1 bis 3, dadurch gekennzeichnet, daß als fester Kettenverlängerer 3,3'-Diamino-4,4'-dimethyldiphenylharnstoff

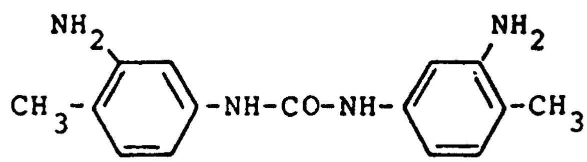

verwendet wird.

**Claims**

1. A process for the production of polyurethane elastomers from NCO-terminated reaction products of polyethers having a molecular weight of from 400 to 10,000 and an additional ethylene oxide content of from 10 to 60 mol-% and polyisocyanates and diaminodiphenylureas corresponding to the following general formula

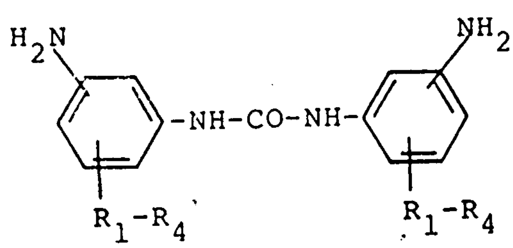

in which the amino groups are in the m- and/or p-position to the urea group and $R^1$ to $R^4$ (identical or different) stand for hydrogen or a $C_1$-$C_6$-alkyl group, characterised in that the isocyanate group-containing polymers are reacted in the heterogeneous phase at temperatures of from 5 to 40 °C with the diaminodiphenylureas which are present in a finely divided form and optionally a retarded form.

2. A process according to Claim 1, characterised in that polypropylene glycol ethers having a molecular weight of from 1000 to 6000 and an additional ethylene oxide content of from 10 to 60%, preferably from 10 to 30%, were used for the preparation of the isocyanate preadduct.

3. A process for the preparation of polyurethaneureas according to Claim 1 or Claim 2, characterised in that the solid chain-lengthening agent containing amino groups is present in the form of a suspension in a high molecular weight polyol and the ratio by weight of diaminodiphenylurea to polyol is in a range of
   1.0 : 0.5 to 5.0, preferably
   1.0 : 1.0 to 2.0.

4. A process according to one of the Claims 1 to 3, characterised in that the solid chain lengthening agent used is 3,3'-diamino-4,4'-dimethyldiphenylurea

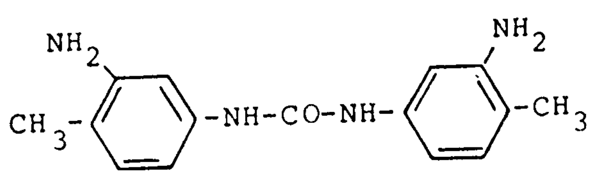

.

**Revendications**

1. Procédé de préparation d'élastomères synthétiques de polyuréthannes à partir de produits de réaction, portant des groupes terminaux NCO, de polyéthers de poids moléculaire 400 à 10 000, contenant en

outre de 10 à 60 mol % d'oxyde d'éthylène, et de polyisocyanates, et de diaminodiphénylurées de formule générale

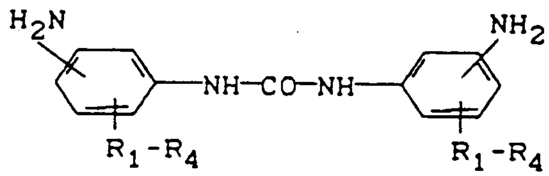

dans laquelle les groupes amino sont en position m et/ou p par rapport au groupe urée et $R^1$ à $R^4$, ayant des significations identiques ou différentes, représentent l'hydrogène ou des groupes alkyle en $C_1$-$C_6$, caractérisé en ce que l'on fait réagir les polymères à groupes NCO avec les diaminodiphénylurées à l'état de fine division et le cas échéant à l'état retardé, en phase hétérogène, à des températures de 5 à 40 ° C.

**2.** Procédé selon la revendication 1, caractérisé en ce que, pour la préparation du pré-adduct à groupes NCO, on a utilisé des éthers de polypropylèneglycol d'un poids moléculaire 1 000 à 6 000 contenant en outre de l'oxyde d'éthylène en proportions de 10 à 60 %, de préférence de 10 à 30 %.

**3.** Procédé de préparation de polyurèthanne-urées selon revendication 1 ou 2, caractérisé en ce que l'agent d'allongement des chaînes solide, contenant des groupes amino, est à l'état de suspension dans un polyol à haut poids moléculaire, et en ce que les proportions relatives en poids entre la diaminodiphénylurée et le polyol se situent dans un intervalle de
1,0:0,5 à 5,0, de préférence
1,0:1,0 à 2,0.

**4.** Procédé selon une des revendications 1 à 3, caractérisé en ce que l'on utilise en tant qu'agent d'allongement des chaînes solide la 3,3'-diamino-4,4'-diméthyldiphénylurée